(19) Europäisches Patentamt / European Patent Office / Office européen des brevets

(11) **EP 4 718 512 A1**

(12) **EUROPEAN PATENT APPLICATION**

(43) Date of publication:
01.04.2026 Bulletin 2026/14

(21) Application number: 25188497.9

(22) Date of filing: 09.07.2025

(51) International Patent Classification (IPC):
$H01M\ 4/133^{(2010.01)}$    $H01M\ 4/134^{(2010.01)}$
$H01M\ 4/36^{(2006.01)}$    $H01M\ 4/38^{(2006.01)}$
$H01M\ 4/587^{(2010.01)}$    $H01M\ 10/0525^{(2010.01)}$

(52) Cooperative Patent Classification (CPC):
H01M 4/386; H01M 4/133; H01M 4/134;
H01M 4/366; H01M 4/587; H01M 10/0525;
H01M 2004/027; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.09.2024 CN 202411352903

(71) Applicant: Zhuhai CosMX Battery Co., Ltd.
Zhuhai, Guangdong 519180 (CN)

(72) Inventors:
• WANG, Hui
Zhuhai, Guangdong, 159180 (CN)
• XUE, Jiachen
Zhuhai, Guangdong, 159180 (CN)
• LIU, Chunyang
Zhuhai, Guangdong, 159180 (CN)
• LI, Suli
Zhuhai, Guangdong, 159180 (CN)

(74) Representative: Vossius & Partner
Patentanwälte Rechtsanwälte mbB
Siebertstrasse 3
81675 München (DE)

(54) **NEGATIVE ELECTRODE ACTIVE MATERIAL, NEGATIVE ELECTRODE PLATE AND BATTERY**

(57) The present disclosure relates to the technical field of batteries, and in particular to a negative electrode active material, and a negative electrode plate and a battery comprising the negative electrode active material. The negative electrode active material comprises silicon-carbon composite particles; the silicon-carbon composite particles have closed pores, and the volume fraction of the closed pores is 4%-50%; the silicon-carbon composite particles have a core-shell structure with a shell thickness of t, where $0 < t \leq 10\,nm$; the silicon-carbon composite particles have a first region and a second region on cross section, the content of silicon element in the first region is c1, the content of silicon element in the second region is c2, and $0.15 \leq c2/c1 \leq 1.4$; where the dimension of the perpendicular line to the tangent line at any point on the edge of the cross section is L on the cross section, and on the perpendicular line, a region 0.001L-0.1L away from the edge of the cross section constitutes the first region, and a region 0.1L-0.5L away from the edge of the cross section constitutes the second region. The battery of the present disclosure can have high energy density, initial Coulombic efficiency, rate performance and cycling stability at the same time.

FIG. 1

## Description

### TECHNICAL FIELD

The present disclosure relates to the technical field of batteries, and in particular to a negative electrode active material, and a negative electrode plate comprising the negative electrode active material, and a battery comprising the negative electrode active material.

### BACKGROUND

Lithium-ion batteries have been widely used in fields such as consumer electronic device, electric vehicles and energy storage power stations with their characteristics such as small volume, light weight and no memory effect. Presently, in a commercialized lithium-ion battery, the negative electrode material is mainly graphite material, but the existing graphite material has a low actual capacity per gram (only about 360 mAh/g) which is close to its theoretical limit (372 mAh/g), resulting in a limited development potential. On the other hand, a silicon-based material has an extremely high theoretical specific capacity (4,200 mAh/g) and is one of the ideal materials for further improvement in the energy density of a lithium-ion battery. However, the existing silicon-based material has a large volume expansion during charge-discharge process of the battery, which easily leads to problems of a rapid cycle attenuation and a large volume change rate of the battery. Additionally, a silicon-based material has a low lithium ion diffusion coefficient, which limits the rapid charging capacity of a silicon-containing lithium-ion battery.

### SUMMARY

An object of the present disclosure is to overcome the aforementioned problems of a silicon-based material in the prior art, and to provide a negative electrode active material, a negative electrode plate comprising the negative electrode active material and a battery comprising the negative electrode active material. The negative electrode active material of the present disclosure has good ionic conductivity and electronic conductivity and a high structural stability while ensuring a high capacity per gram. The battery comprising the negative electrode active material of the present disclosure can have high energy density, initial Coulombic efficiency, rate performance and cycling stability.

In the related technology, the silicon-based material has problems of large volume expansion and low lithium ion diffusion coefficient. The inventors of the present disclosure have found, through numerous researches, that by preparing a composite material from silicon and carbon, and controlling the relationship between the silicon contents in specific regions of the silicon-carbon composite particles, the volume fraction of the closed pores and the thickness of the shell, the negative electrode active material can have high ionic conductivity and electronic conductivity and a good structural stability while ensuring a high capacity per gram, resulting in a small volume expansion during cycling of the battery. The reasons may be that:

firstly, the formation of a closed pore structure in the silicon-carbon composite particles is related to the deposition of silicon during the preparation of particles, so the volume of the closed pores is related to the content of silicon in the silicon-carbon composite particles. The content of silicon in the silicon-carbon composite particles directly affects their volume expansion, and in a certain range, a higher silicon content indicates a larger volume expansion of the silicon-carbon composite particles. Additionally, the volume of the closed pores can provide a certain buffering space for the expansion of silicon, so the volume expansion of the silicon-carbon composite particles can be improved by regulating the volume fraction of the closed pores.

Secondly, the surface of the core of the silicon-carbon composite particles is provided with a shell containing a carbon element, which can significantly improve the electronic conductivity and ionic conductivity of the silicon-carbon composite particles. However, the theoretical capacity per gram of a carbon material is lower than that of a silicon material, so the thickness of the shell needs to be controlled, so that the silicon-carbon composite particles can balance capacity per gram, ionic conductivity and electronic conductivity.

Thirdly, controlling only the volume fraction of the closed pores and the thickness of the shell has limited improvement in the performance of the silicon-carbon composite particles, because by providing a coating layer on the surface of the core of the silicon-carbon composite particles, the improvement effect in electronic conductivity and ionic conductivity is better achieved at the outer side of the silicon-carbon composite particles than that at their inner side; As a result, the transport rates of electrons and ions at the outer side and inner side of the silicon-carbon composite particles do not match each other, thereby having an adverse effect on the volume expansion of the negative electrode active material while affecting the overall ionic conductivity, electronic conductivity and capacity utilization of the negative electrode active material. Therefore, based on specific volume fraction of the closed pores and the thickness of the shell, there is a need to synergistically control the relationship between the silicon contents in specific regions of the silicon-carbon composite particles; so that the transport rates of electrons and ions in each region of the silicon-carbon composite particles can match each other, and the volume expansion is balanced. Thereby, the overall capacity utilization per gram, ionic conductivity, electronic conductivity and structural stability of the negative electrode active material are improved. Based on this, the inventors of the present disclosure propose the following solutions:

A first aspect of the present disclosure provides a negative electrode active material comprising silicon-carbon composite particles, wherein the silicon-carbon composite particles have closed pores, and the volume fraction of the closed pores is 4%-50%; the silicon-carbon composite particles have a core-shell structure, the shell of the core-shell structure comprises a carbon element and has a thickness of t, and $0 < t \leq 10$ nm; the silicon-carbon composite particles have a first region and a second region on cross section, the content of silicon element in the first region is $c_1$, the content of silicon element in the second region is $c_2$, and $0.15 \leq c_2/c_1 \leq 1.4$; where the dimension of the perpendicular line to the tangent line at any point on the edge of the cross section is L on the cross section, and on the perpendicular line, a region 0.001L-0.1L away from the edge of the cross section constitutes the first region, and a region 0.1L-0.5L away from the edge of the cross section constitutes the second region.

A second aspect of the present disclosure provides a negative electrode plate comprising the negative electrode active material according to the first aspect of the present disclosure.

A third aspect of the present disclosure provides a battery comprising the negative electrode active material according to the first aspect of the present disclosure and/or the negative electrode plate according to the second aspect of the present disclosure.

By means of the technical solutions described above, the present disclosure has at least the following advantages over the prior art:

(1) The negative electrode active material of the present disclosure has good ionic conductivity and electronic conductivity while ensuring a high capacity per gram;
(2) The negative electrode active material of the present disclosure has a good structural stability, and can maintain a low volume expansion during the charge-discharge cycles of the battery.
(3) The battery of the present disclosure can have high energy density, initial Coulombic efficiency, rate performance and cycling stability.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

**BRIEF DESCRIPTION OF DRAWINGS**

FIG. 1 shows a schematic cross-sectional view of silicon-carbon composite particles in an example of the present disclosure.
FIG. 2 shows a transmission electron microscope (TEM) image of silicon-carbon composite particles in an example of the present disclosure.

**DESCRIPTION OF EMBODIMENTS**

Hereinafter, specific embodiments of the present disclosure will be described in detail. It should be understood that the specific embodiments described herein are only used to illustrate and explain the present disclosure and are not used to limit the present disclosure.

A first aspect of the present disclosure provides a negative electrode active material that may comprise silicon-carbon composite particles. The silicon-carbon composite particles may have closed pores, and the volume fraction of the closed pores may be 4%-50%, for example 4%, 5%, 10%, 20%, 30%, 40% or 50%. The silicon-carbon composite particles may have a core-shell structure. The shell of the core-shell structure may comprise a carbon element. The shell has a thickness of t, and $0 < t \leq 10$ nm, for example 0.1 nm, 0.5 nm, 1 nm, 2 nm, 3 nm, 4 nm, 5 nm, 6 nm, 7 nm, 8 nm, 9 nm or 10 nm. The silicon-carbon composite particles have a first region and a second region on cross section. The content of silicon element in the first region is $c_1$, the content of silicon element in the second region is $c_2$, and $0.15 \leq c_2/c_1 \leq 1.4$, for example 0.15, 0.2, 0.3, 0.4, 0.5, 0.6, 0.7, 0.8, 0.9, 1, 1.1, 1.2, 1.3 or 1.4. Here, the dimension of the perpendicular line to the tangent line at any point on the edge of the cross section is L on the cross section, and on the perpendicular line, a region 0.001L-0.1L away from the edge of the cross section constitutes the first region, and a region 0.1L-0.5L away from the edge of the cross section constitutes the second region. On the perpendicular line, the region 0.1L away from the edge of the cross section belongs to the first region.

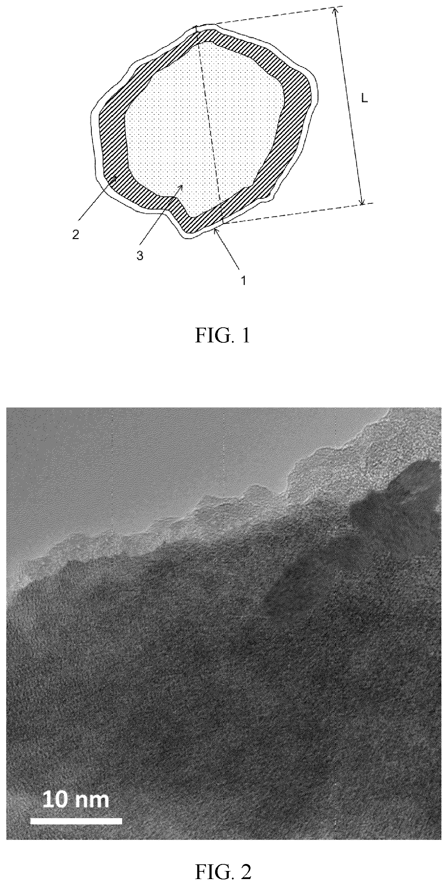

FIG. 1 shows a schematic cross-sectional view of the silicon-carbon composite particles in an example of the present disclosure, and as can be seen from the figure, the dimension of the perpendicular line to the tangent line at any point on the edge of the cross section is L on the cross section, and on the perpendicular line, a region 0.001L-0.1L away from the edge 1 of the cross section constitutes a first region 2, and a region 0.1L-0.5L away from the edge 1 of the cross section constitutes a second region 3.

In an embodiment, $0.15 < c_2/c_1 \leq 1.25$.

In an embodiment, $0.23 < c_2/c_1 \leq 0.76$.

When $c_2/c_1$ is more than 1.4, the silicon content of the second region located at a relatively inner portion of the silicon-carbon composite particles is higher than that in the first region, and as a result of this, the expansion stress of silicon is mainly concentrated at the inner portion of the silicon-carbon composite particles, which is not conducive to the buffering of the closed pores against the volume expansion of silicon, resulting in the cracking of the negative electrode active material during lithium intercalation/deintercalation, and thereby resulting in a decrease in cycling capacity retention rate of the battery.

In the present disclosure, the content of silicon element in the first region and the content of silicon element in the second region may be measured by a conventional method in the art, for example by an energy dispersive spectrometer (EDS), and the details are as follows: silicon-carbon composite particles, a binder and a solvent are mixed until uniform, and then applied onto the surface of a metal sheet (for example a copper foil) and dried (alternatively, a metal sheet including the silicon-carbon composite particles is used). Then, treatment is performed using an argon-ion cutter (for example an argon-ion section polisher, IB-19530CP, available from JEOL), and the sample after cut is rapidly transferred into a scanning electron microscope sample chamber for observation, and EDS point scan mode is used to respectively measure at least 5 points in the first region and the second region, so as to obtain the silicon content of each point, and the resulting values are averaged.

In an embodiment, the volume fraction of the closed pores is 5%-49%.

In an embodiment, the volume fraction of the closed pores is 11%-35%.

When the volume fraction of the closed pores is small (for example less than 4%), the volume of closed pores in the silicon-carbon composite particles is small, making it difficult to effectively buffer the volume expansion of silicon, and leading to a high thickness expansion rate during cycling of the battery; and when the volume fraction of the closed pores is large (for example more than 50%), the volume of the closed pores in the silicon-carbon composite particles is large, resulting in a low energy density of the battery.

In the present disclosure, the volume of the closed pores refers to the ratio of the volume of the closed pores to the volume of the silicon-carbon composite particles. The volume of the closed pores may be calculated by the following formula: volume of closed pores = $1-g/(2.33-0.02 \times c)$, where g is the true density (in $g/cm^3$) of the silicon-carbon composite particles, c is the mass content of silicon element in the silicon-carbon composite particles.

In an embodiment, $0.2 \text{ nm} \leq t \leq 10 \text{ nm}$.

In an embodiment, $1 \text{ nm} \leq t \leq 8 \text{ nm}$.

The shell containing carbon element can improve the electronic conductivity of the silicon-carbon composite particles, but when the thickness of the shell is too large (for example more than 10 nm), the mass fraction of the shell is large, resulting in a low capacity per gram of the silicon-carbon composite particles, and thereby resulting in a low energy density of the battery.

In the present disclosure, the thickness of the shell may be measured by a conventional method in the art, for example by TEM, and the details are as follows: by means of a JEM-F200 field emission transmission electron microscopy available from JEOL, at least 10 points are selected on the surface of the silicon-carbon composite particles, and the thickness of the shell at each point is measured and averaged.

In the present disclosure, the content $c_1$ of silicon element in the first region may be 30%-75%, for example 30%, 30%, 40%, 50%, 60%, 70% or 75%.

In an embodiment, the content $c_1$ of silicon element in the first region is 31%-71%.

In an embodiment, the content $c_1$ of silicon element in the first region is 38%-66%.

In the present disclosure, the content $c_2$ of silicon element in the second region may be 5%-60%, for example 5%, 10%, 20%, 30%, 40%, 50%, 55% or 60%.

In an embodiment, the content $c_2$ of silicon element in the second region is 6%-55%.

In an embodiment, the content $c_2$ of silicon element in the second region is 9%-50%.

In the present disclosure, the mass content of silicon element in the silicon-carbon composite particles may be 20%-65%, for example 20%, 30%, 40%, 50% or 60%.

In an embodiment, the mass content of silicon element in the silicon-carbon composite particles is 21%-64%.

In an embodiment, the mass content of silicon element in the silicon-carbon composite particles is 25%-60%.

When the mass content of silicon element in the silicon-carbon composite particles is small (for example less than 20%), the capacity per gram of the silicon-carbon composite particles is low, resulting in a low energy density of the battery;

and when the mass content of silicon element in the silicon-carbon composite particles is large (for example more than 65%), the volume of the closed pores can not effectively alleviate the volume expansion of silicon, resulting in a poor structural stability of the silicon-carbon composite particles, thus affecting the cycling capacity retention rate and thickness expansion rate of the battery.

In the present disclosure, the mass content of silicon element in the silicon-carbon composite particles may be measured by a conventional method in the art, for example by a thermogravimetric analysis method, and the details are as follows: measurement is performed using Shimadzu DTG-60 thermogravimetric analyzer, and test conditions are as follows: the amount of the sample is 5 mg, air is used as an atmosphere, and the temperature is increased at a heating rate of 10°C/min from room temperature to 900°C and maintain for 40 min. The mass content c of silicon element in the silicon-carbon composite particles is $7z/15$, where z is the final residual weight percentage of test.

FIG. 2 is a TEM image of the silicon-carbon composite particles in an example of the present disclosure, and as can be seen from the figure, both core and surface layer of the composite particles are amorphous, and the thickness of the surface layer is about 3 nm-5 nm.

In the present disclosure, the core of the core-shell structure may comprise a carbon element and a silicon element.

In an embodiment, the core comprises porous carbon and a silicon material located in the pores of the porous carbon.

In an embodiment, the shell comprises amorphous carbon.

In the present disclosure, the silicon-carbon composite particles may comprise at least one of a nitrogen element, a phosphorus element and a sulfur element.

The electronegativity of the nitrogen element, the phosphorus element and the sulfur element are all stronger than that of the carbon element, so the reaction with lithium element occurs more easily. When at least one of nitrogen element, phosphorus element and sulfur element is introduced to silicon-carbon composite particles, the reaction energy barrier of intercalation of Li$^+$ into the silicon-carbon composite particles can be reduced, so that the migration of lithium ions in the silicon-carbon composite particles becomes easier, which is conducive to improving the ionic conductivity of the negative electrode active material.

In an embodiment, the silicon-carbon composite particles comprise a nitrogen element, a phosphorus element and a sulfur element.

In the present disclosure, the sum of the contents of the nitrogen element, the phosphorus element and the sulfur element in the silicon-carbon composite particles may be 15 ppm-1,000 ppm, for example 15 ppm, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm or 1,000 ppm.

In an embodiment, the sum of the contents of the nitrogen element, the phosphorus element and the sulfur element in the silicon-carbon composite particles is 30 ppm-500 ppm.

When the sum of the contents of the nitrogen element, the phosphorus element and the sulfur element in the silicon-carbon composite particles is too small (for example less than 15 ppm), the ionic conductivity of the negative electrode active material can not be effectively improved; and when the sum of the contents of the nitrogen element, the phosphorus element and the sulfur element in the silicon-carbon composite particles is too large (for example more than 1,000 ppm), the capacity per gram of the negative electrode active material is reduced, resulting in a decrease in initial Coulombic efficiency and energy density of the battery. When the sum of the contents of the nitrogen element, the phosphorus element and the sulfur element in the silicon-carbon composite particles is in a specific range, the negative electrode active material has a high lithium ion diffusion coefficient, which can improve the rapid discharge capability of the battery.

In the present disclosure, the contents of the nitrogen element, the nitrogen element and the sulfur element in the silicon-carbon composite particles may be measured by a conventional method in the art, and the contents of the nitrogen element and the sulfur element are measured, for example by an element analyzer. The content of the phosphorus element is measured, for example, by means of inductively coupled plasma-atomic emission spectrometry (ICP-AES).

In the present disclosure, the particle sizes Dv90 and Dv10 of the silicon-carbon composite particles satisfy 5 μm ≤ Dv90-Dv10 ≤ 25 μm, for example 5 μm, 10 μm, 15 μm, 20 μm or 25 μm.

In an embodiment, 7 μm ≤ Dv90-Dv10 ≤ 24 μm.

In an embodiment, 7 μm ≤ Dv90-Dv10 ≤ 18 μm.

The difference between Dv90 and Dv10 can indicate the concentration of the particle size distribution of the silicon-carbon composite particles. When the difference between the two is small (for example less than 5 μm), it indicates that the majority of the particles in the silicon-carbon composite particles are of comparable particle size, which may reduce the bulk density of the silicon-carbon composite particles, and thereby reducing the volume energy density of the battery; and when the difference between the two is large (for example more than 25 μm), it indicates that the silicon-carbon composite particles have more particles of smaller particle size, and consequently the specific surface area of the silicon-carbon composite particles is large, and there are more side reaction between the negative electrode active material and electrolyte during the first charge-discharge cycle of the battery, thereby reducing the initial Coulombic efficiency of the battery. Alternatively, when the difference between the two is large, it indicates that the silicon-carbon composite particles have more particles of larger particle size, which may affect the processability of the negative electrode active material. During the preparation of the battery, silicon-carbon composite particles of large particle size can be sieved out easily, and consequently the volume energy density of the battery is low. When the difference between the two is in a specific range, it is conducive to improving the initial Coulombic efficiency and volume energy density of the battery.

In the present disclosure, the particle sizes Dv10 and Dv90 of the silicon-carbon composite particles may be measured by a conventional method in the art, for example by a laser particle size measurement method, and the details are as follows: measurement is performed using a Malvern particle size tester, and the steps of the measurement are as follows: the silicon-carbon composite particles are dispersed in a dispersant (for example, nonylphenol polyoxyethylene ether)-containing deionized water (with the mass content of the dispersant being 0.02%-0.03%), ultrasonicated for 2 min, and then placed in a Malvern particle size tester for measurement.

In the present disclosure, Dv10 may be 1 $\mu$m-6 $\mu$m, for example 1 $\mu$m, 2 $\mu$m, 3 $\mu$m, 4 $\mu$m, 5 $\mu$m or 6 $\mu$m.

In an embodiment, Dv10 is 2 $\mu$m-6 $\mu$m.

In an embodiment, Dv10 is 2 $\mu$m-5 $\mu$m.

In the present disclosure, Dv90 may be 10 $\mu$m-30 $\mu$m, for example 10 $\mu$m, 15 $\mu$m, 20 $\mu$m, 25 $\mu$m or 30 $\mu$m.

In an embodiment, Dv90 is 12 $\mu$m-30 $\mu$m.

In an embodiment, Dv90 is 12 $\mu$m-20 $\mu$m.

In the present disclosure, the oil absorption value of the silicon-carbon composite particles may be 10 ml/100 g-100 ml/100 g, for example 10 ml/100 g, 20 ml/100 g, 30 ml/100 g, 40 ml/100 g, 50 ml/100 g, 60 ml/100 g, 70 ml/100 g, 80 ml/100 g, 90 ml/100 g or 100 ml/100 g.

In an embodiment, the oil absorption value of the silicon-carbon composite particles is 31 ml/100 g-79 ml/100 g.

The oil absorption value can indicate the volume of the stacked pores formed after the stacking of the silicon-carbon composite particles. When the oil absorption value of the silicon-carbon composite particles is small (for example less than 10 ml/100 g), the volume of the pores formed after the stacking of the silicon-carbon composite particles is small, which indicates that the negative electrode plate comprising the silicon-carbon composite particles has a poor electrolyte retention capability, resulting in a decrease in cycling capacity retention rate of the battery; and when the oil absorption value of the silicon-carbon composite particles is large (for example more than 100 ml/100 g), the volume of pores formed after the stacking of the silicon-carbon composite particles is large, which indicates that the porosity of the negative electrode plate comprising the silicon-carbon composite particles is high, resulting in a decrease in volume energy density of the battery. When the oil absorption value of the silicon-carbon composite particles is in a specific range, the battery can have a high cycling capacity retention rate and a high volume energy density at the same time.

In the present disclosure, the oil absorption value of the silicon-carbon composite particles may be measured by, for example the following method: the mass of clean beaker and glass rod is weighed and recorded as m1, and 5 g of the silicon-carbon composite particles were added thereto, and then the total mass is recorded as m2, and dioctyl phthalate (DOP) was added dropwise using a titration bottle, and the total mass of beaker at this time is weighed and recorded as m3, and the oil absorption value of the silicon-carbon composite particles is (m3-m2)/(m2-m1)$\times$100.

In the present disclosure, the silicon-carbon composite particles may also comprise a lithium element.

During the production or use of the silicon-carbon composite particles, the contact with air or water may occur, and consequently the silicon-carbon composite particles comprises an oxygen element. At this time, if the silicon-carbon composite particles comprises a lithium element, then lithium will combine with oxygen in the silicon-carbon composite particles, so that the oxygen element no longer reacts with lithium in electrolyte during the first charge-discharge cycle of the battery, thereby being able to improve the initial Coulombic efficiency of the battery.

In the present disclosure, the content of lithium element in the silicon-carbon composite particles may be 0.1%-20%; for example 0.1%, 0.5%, 1%, 2%, 3%, 4%, 5%, 6%, 7%, 8%, 9%, 10%, 11%, 12%, 13%, 14%, 15%, 16%, 17%, 18%, 19% or 20%.

In an embodiment, the content of lithium element in the silicon-carbon composite particles is 1%-5%.

When the content of lithium element in the silicon-carbon composite particles is large (for example more than 20%), lithium which is not combined with oxygen element is easy to appear in the silicon-carbon composite particles, and such lithium is active and prone to reacting with the solvent in slurry during the preparation of electrode plate and generating gas. Therefore, the processibility of the negative electrode active material will be deteriorated, which is detrimental to the energy density and cycling retention rate of the battery.

In the present disclosure, the content of lithium element in the silicon-carbon composite particles may be measured by a conventional method in the art, for example by ICP-AES.

**In** the present disclosure, the silicon-carbon composite particles have a weight gain peak at 600°C-800°C in a thermogravimetric curve under an air atmosphere.

The weight changes of the silicon-carbon composite particles within different temperature ranges in the thermogravimetric test correspond to different thermal behaviors, for example, the weight loss at a temperature range < 400°C is typically caused by the volatilization of moisture in the material during temperature rise, and the weight loss at a temperature range > 550°C is typically caused by a process in which the carbon material reacts with oxygen in air to produce $CO_2$. The weight gain at a temperature range > 600°C is caused by a process in which the silicon in the silicon-carbon composite particles reacts with oxygen in air to produce $SiO_2$. The presence of weight gain peak at 600°C-800°C indicates that the core is completely coated with the shell in the silicon-carbon composite particles, and the silicon therein has activity to enable the battery with a high initial Coulombic efficiency.

In an embodiment, the silicon-carbon composite particles have a weight gain rate of 0.1%-40% at 600°C-800°C in a thermogravimetric curve under an air atmosphere, for example 0.1%, 0.5%, 1%, 5%, 10%, 15%, 20%, 25%, 30%, 35% or 40%.

In an embodiment, the silicon-carbon composite particles have a weight gain rate of 0.5%-24.8% at 600°C-800°C in a thermogravimetric curve under an air atmosphere.

$SiO_2$ reacts with lithium during the charge-discharge process of the battery and causes an irreversible capacity loss, so when the weight gain rate at 600°C-800°C is in a specific range, it indicates that the active silicon in the silicon-carbon composite particles is well protected by the shell, without being oxidized to $SiO_2$, and additionally the thickness of the shell at this time will not be too thick, so that the battery has high initial Coulombic efficiency and energy density.

In the present disclosure, the specific steps of thermogravimetric test of the silicon-carbon composite particles are as follows: a Shimadzu DTG-60 thermogravimetric analyzer is used, the amount of the test sample is 5 mg, the test atmosphere is air, the heating rate is 10°C/min, and the test temperature range is room temperature to 900°C.

In the present disclosure, the true density of the silicon-carbon composite particles may be 1.4 g/cm$^3$-2.2 g/cm$^3$, for example 1.4 g/cm$^3$, 1.5 g/cm$^3$, 1.6 g/cm$^3$, 1.7 g/cm$^3$, 1.8 g/cm$^3$, 1.9 g/cm$^3$, 2 g/cm$^3$, 2.1 g/cm$^3$ or 2.2 g/cm$^3$.

When the true density of the silicon-carbon composite particles is in a specific range, the silicon-carbon composite particles have a suitable closed pore volume. When the true density is small (for example less than 1.4 g/cm$^3$), the silicon-carbon composite particles comprise an excessively large amount of closed pores, which easily enables the battery to have a low volume energy density; and when the true density is large (for example more than 2.2 g/cm$^3$), the silicon-carbon composite particles comprise an excessively small amount of closed pores, which makes it difficult to buffer the volume expansion of silicon, thereby affecting the thickness expansion rate of the battery.

In the present disclosure, the true density of the silicon-carbon composite particles may be measured by a conventional method in the art, for example by a gas volume displacement method, and the details are as follows: the measurement is performed using a JW-M100A fully-automatic true density tester available from JWGB Instrument, the test gas is helium, and the ambient temperature for test is 25°C $\pm$ 2°C.

In the present disclosure, the particle size Dv50 of the silicon-carbon composite particles may be 6 μm-15 μm, for example 6 μm, 7 μm, 8 μm, 9 μm, 10 μm, 11 μm, 12 μm, 13 μm, 14 μm or 15 μm.

In an embodiment, the particle size Dv50 of the silicon-carbon composite particles is 7 μm-12 μm.

When the particle size Dv50 of the silicon-carbon composite particles is small (for example less than 6 μm), the average particle size of the silicon-carbon composite particles is small, and the specific surface area is large, which results in more side reactions between the negative electrode active material and electrolyte and a decrease in initial Coulombic efficiency and volume energy density of the battery during the charge-discharge process of the battery; and when the particle size Dv50 of the silicon-carbon composite particles is large (for example more than 15 μm), the average particle size of the silicon-carbon composite particles is large, the migration distance of lithium ions in the negative electrode active material becomes longer, which affects the rapid discharge capacity of the battery.

In the present disclosure, the particle size Dv50 of the silicon-carbon composite particles may be measured by a conventional method in the art, for example by a laser particle size measurement method, and the details are as follows: measurement is performed using a Malvern particle size tester, and the steps of the measurement are as follows: the silicon-carbon composite particles are dispersed in a dispersant (for example, nonylphenol polyoxyethylene ether)-containing deionized water (with the mass content of the dispersant being 0.02%-0.03%), ultrasonicated for 2 min, and then placed in a Malvern particle size tester for measurement.

In the present disclosure, the specific surface area of the silicon-carbon composite particles may be 0.2 m$^2$/g-20 m$^2$/g, for example 0.2 m$^2$/g, 0.5 m$^2$/g, 1 m$^2$/g, 2 m$^2$/g, 3 m$^2$/g, 4 m$^2$/g, 5 m$^2$/g, 6 m$^2$/g, 7 m$^2$/g, 8 m$^2$/g, 9 m$^2$/g, 10 m$^2$/g, 11 m$^2$/g, 12 m$^2$/g, 13 m$^2$/g, 14 m$^2$/g, 15 m$^2$/g, 16 m$^2$/g, 17 m$^2$/g, 18 m$^2$/g, 19 m$^2$/g or 20 m$^2$/g.

In an embodiment, the specific surface area of the silicon-carbon composite particles is 0.5 m$^2$/g-10.3 m$^2$/g.

When the specific surface area of the silicon-carbon composite particles is small (for example less than 0.2 m$^2$/g), the specific surface area of the silicon-carbon composite particles is too small, and during the preparation of the electrode plate, the amount of binder that can be adsorbed on the surface of the negative electrode active material is small, so that the negative electrode active material easily detached from the negative electrode plate during cycling of the battery, resulting in a decay in battery capacity; and when the specific surface area of the silicon-carbon composite particles is large (for example more than 20 m$^2$/g), the specific surface area of the silicon-carbon composite particles is too large, resulting in more side reactions between the negative electrode active material and electrolyte and a decrease in initial Coulombic efficiency and volume energy density of the battery.

In the present disclosure, the specific surface area of the silicon-carbon composite particles may be measured by a conventional method in the art, for example by a Tri Star II specific surface analyzer.

In the present disclosure, the negative electrode active material may further comprise a carbon-based material. The carbon-based material may include at least one of artificial graphite, natural graphite, mesocarbon microbeads, soft carbon and hard carbon.

In the present disclosure, the mass ratio of the silicon-carbon composite particles to the carbon-based material may be 1 : (0.01-50), for example 1 : 0.01, 1 : 0.05, 1 : 0.1, 1 : 0.5, 1 : 1, 1 : 5, 1 : 10, 1 : 20, 1 : 30, 1 : 40 or 1 : 50.

In an embodiment, the mass ratio of the silicon-carbon composite particles to the carbon-based material is 1 : (0.1-19).

The present disclosure further provides a method for preparing the silicon-carbon composite particles, which includes at least the following steps:

placing a porous carbon material in a vapor deposition equipment, introducing $N_2$, and increasing the temperature to 300°C-500°C; performing a first introduction of silane gas, followed by a second introduction of silane gas; and stopping the introduction of silane gas, increasing the temperature to 450°C-650°C, and then introducing acetylene gas.

In the present disclosure, the flow rate of the introduced $N_2$ is 100 sccm-300 sccm.

In the present disclosure, the flow rate of the first introduction is 10 sccm-200 sccm; and the duration of the first introduction is 20 min-300 min.

In the present disclosure, the flow rate of the second introduction is 50 sccm-300 sccm; and the duration of the first introduction is 20 min-300 min.

In the present disclosure, the flow rate of the introduced acetylene gas is 50 sccm-200 sccm; and the duration of the acetylene gas introduction is 5 min-240 min.

In the present disclosure, the preparation method further include pre-treating the porous carbon material, and then placing same in a vapor deposition equipment.

In the present disclosure, the pre-treatment may include soaking the porous carbon material in a solvent. The solvent may include at least one of nitric acid, sulfuric acid and phosphoric acid. The concentration of the solvent is, for example 0.001 mol/L-0.05 mol/L. The temperature of the soaking may be 90°C-100°C. The duration of the soaking may be 3 h-60 h.

In the present disclosure, the preparation method further includes introducing acetylene gas, and then soaking in a lithiation solvent, and drying. The lithiation solvent includes, for example a solution of lithium biphenyl in tetrahydrofuran. The duration of the soaking is, for example 1 min-60 min.

A second aspect of the present disclosure provides a negative electrode plate comprising the negative electrode active material according to the first aspect of the present disclosure.

In the present disclosure, the negative electrode plate may comprise a negative electrode current collector and a negative electrode active material layer located on a surface of at least one side of the negative electrode current collector. The negative electrode active material layer may comprise the negative electrode active material.

In the present disclosure, the negative electrode active material layer may further comprise a negative electrode conductive agent and a negative electrode binder. The negative electrode conductive agent may include at least one of conductive carbon black, acetylene black, Ketjen black, conductive graphite, carbon nanotubes (including at least one of single-walled carbon nanotubes and multi-walled carbon nanotubes) and carbon fibers. The negative electrode binder may include at least one of polyvinylidene fluoride (PVDF), sodium carboxymethyl cellulose, styrene-butadiene rubber, polytetrafluoroethylene, polyethylene oxide, polyacrylic acid, and derivatives thereof.

In the present disclosure, based on the total mass of the negative electrode active material layer, the content of the negative electrode active material may be 80-99.8 wt% (for example 80, 82, 84, 86, 88, 90, 92, 94, 96, 98, 99 or 99.8 wt%), the content of the negative electrode conductive agent may be 0.1-10 wt% (for example 10, 9, 8, 7, 6, 5, 4, 3, 2, 1, 0.5 or 0.1 wt%), and the content of the negative electrode binder may be 0.1-10 wt% (for example 10, 9, 8, 7, 6, 5, 4, 3, 2, 1, 0.5 or 0.1 wt%).

A third aspect of the present disclosure provides a battery, and the battery may comprise the negative electrode active material according to the first aspect of the present disclosure and/or the negative electrode plate according to the second aspect of the present disclosure.

In the present disclosure, the components (for example, a positive electrode plate, a separator and an electrolyte) of the battery in addition to the negative electrode plate may be common choices in the art.

In an embodiment, the battery includes a lithium-ion battery.

In an embodiment, the battery includes a lithium-ion secondary battery.

It should be noted that the digital representations such as "first" and "second" in the present disclosure are only used to distinguish different materials or usage modes and do not represent the difference in order.

The present disclosure will be described in detail below by means of example s. The example s described in the present disclosure are only some, rather than all, of the example s of the present disclosure. Based on the examples in the present disclosure, all other examples obtained by those of ordinary skill in the art without involving creative effort belong to the scope of protection of the present disclosure.

In the following examples, unless otherwise specified, all the materials used are commercially available and analytically pure.

The following preparation examples are used to prepare the silicon-carbon composite particles of the present disclosure.

Preparation example 1

The silicon-carbon composite particles were prepared in accordance with the following method:

(1) Pre-treatment of porous carbon: A porous carbon material (with a Dv10 of 4 $\mu$m, a Dv50 of 9 $\mu$m and a Dv90 of 15 $\mu$m) was placed in a mixed solution of nitric acid, sulfuric acid and phosphoric acid (the total concentration of nitric acid, sulfuric acid and phosphoric acid was 0.01 mol/L) in a ratio of 1 g/100 mL, and heated to 100°C in a closed container, soaked for 24 h, taken out, washed, and dried.

(2) The resulting material was placed in a vapor deposition furnace, and $N_2$ was introduced at 200 sccm, and meanwhile the temperature was raised to 500°C, and then silane gas was sequentially introduced at a flow rate of 100 sccm for 2 h and at a flow rate of 200 sccm for 2 h. Then, the introduction of silane was stopped, the temperature was raised to 650°C, and acetylene gas was introduced at a flow rate of 100 sccm for 1 h.

(3) The resulting material was soaked in 0.5 mol/L solution of lithium biphenyl in tetrahydrofuran for 5 min, and dried.

Preparation example 2

(1) Pre-treatment of porous carbon: A porous carbon material (with a Dv10 of 2 $\mu$m, a Dv50 of 12 $\mu$m and a Dv90 of 20 $\mu$m) was placed in a mixed solution of nitric acid, sulfuric acid and phosphoric acid (the total concentration of nitric acid, sulfuric acid and phosphoric acid was 0.01 mol/L) in a ratio of 1 g/100 mL, and heated to 100°C in a closed container, soaked for 10 h, taken out, washed, and dried.

(2) The resulting material was placed in a vapor deposition furnace, and $N_2$ was introduced at 200 sccm, and meanwhile the temperature was raised to 500°C, and then silane gas was sequentially introduced at a flow rate of 100 sccm for 30 min and at a flow rate of 200 sccm for 80 min. Then, the introduction of silane was stopped, the temperature was raised to 650°C, and acetylene gas was introduced at a flow rate of 100 sccm for 20 min.

(3) The resulting material was soaked in 0.5 mol/L solution of lithium biphenyl in tetrahydrofuran for 3 min, and dried.

Preparation example 3

(1) Pre-treatment of porous carbon: A porous carbon material (with a Dv10 of 5 $\mu$m, a Dv50 of 7 $\mu$m and a Dv90 of 12 $\mu$m) was placed in a mixed solution of nitric acid, sulfuric acid and phosphoric acid (the total concentration of nitric acid, sulfuric acid and phosphoric acid was 0.01 mol/L) in a ratio of 1 g/100 mL, and heated to 100°C in a closed container, soaked for 36 h, taken out, washed, and dried.

(2) The resulting material was placed in a vapor deposition furnace, and $N_2$ was introduced at 200 sccm, and meanwhile the temperature was raised to 500°C, and then silane gas was sequentially introduced at a flow rate of 100 sccm for 150 min and at a flow rate of 200 sccm for 150 min. Then, the introduction of silane was stopped, the temperature was raised to 650°C, and acetylene gas was introduced at a flow rate of 100 sccm for 120 min.

(3) The resulting material was soaked in 0.5 mol/L solution of lithium biphenyl in tetrahydrofuran for 10 min, and dried.

A set of preparation examples 4

This set of preparation examples was used to verify the effect of the change in "the volume fraction of closed pores".

This set of examples was performed with reference to Preparation example 1, except that the volume fraction of the closed pores was controlled by regulating the duration of silane gas introduction, and the details were as follows:

In Preparation example 4a, silane gas was sequentially introduced at a flow rate of 100 sccm for 180 min and at a rate of 200 sccm for 180 min;

In Preparation example 4b, silane gas was sequentially introduced at a flow rate of 100 sccm for 25 min and at a rate of 200 sccm for 60 min.

A set of preparation examples 5

This set of preparation examples was used to verify the effect of the change in "the thickness t of shell".
This set of examples was performed with reference to Preparation example 1, except that the thickness t of the shell was controlled by regulating the duration of acetylene gas introduction, and the details were as follows:
In Preparation example 5a, acetylene gas was introduced at a flow rate of 100 sccm for 5 min;
In Preparation example 5b, acetylene gas was introduced at a flow rate of 100 sccm for 200 min;

A set of preparation examples 6

This set of preparation examples was used to verify the effect of the change in "c2/c1".
This set of examples was performed with reference to Preparation example 1, except that c2/c1 was controlled by regulating the duration of silane gas introduction, and the details were as follows:
In Preparation example 6a, silane gas was sequentially introduced at a flow rate of 100 sccm for 150 min and at a rate of 200 sccm for 90 min;
In Preparation example 6b, silane gas was sequentially introduced at a flow rate of 100 sccm for 30 min and at a rate of 200 sccm for 150 min.

A set of preparation examples 7

This set of preparation examples was used to verify the effect of the change in "the nitrogen element, phosphorus element and sulfur element in silicon-carbon composite particles".
This set of examples was performed with reference to Preparation example 1, except that the nitrogen element, phosphorus element and sulfur element in silicon-carbon composite particles were controlled by regulating the pre-treatment of porous carbon in step (1), and the details were as follows:
In Preparation example 7a, the mixed solution was replaced with a sulfuric acid solution having a concentration of 0.01 mol/L;
In Preparation example 7b, the porous carbon was not pre-treated, and was directly subjected to step (2).

A set of preparation examples 8

This set of preparation examples was used to verify the effect of the change in "the sum of the contents of nitrogen element, phosphorus element and sulfur element".
This set of examples was performed with reference to Preparation example 1, except that the sum of the contents of nitrogen element, phosphorus element and sulfur element was controlled by regulating duration of the soaking in step (1), and the details were as follows:
In Preparation example 8a, the duration of the soaking in step (1) was 3 h;
In Preparation example 8b, the duration of the soaking in step (1) was 60 h.

Preparation example 9

This preparation example was used to verify the effect of the change in "Dv90-Dv10 of silicon-carbon composite particles".
This preparation example was performed with reference to Preparation example 1, except that the particle sizes of the silicon-carbon composite particles were controlled by regulating the particle size of the porous carbon, specifically: As for the particle size of the porous carbon material: Dv10 was 6 $\mu$m, Dv50 was 15 $\mu$m, and Dv90 was 30 $\mu$m.

A set of preparation examples 10

This set of preparation examples was used to verify the effect of the change in "the content of lithium element in silicon-carbon composite particles".
This set of preparation examples was performed with reference to Preparation example 1, except that the content of lithium element in the silicon-carbon composite particles was controlled by regulating step (3), and the details were as follows:
In Example 10a, step (3) was not performed, i.e., the materials obtained in step (2) was the silicon-carbon composite particles;
In Example 10b, the duration of the soaking in step (3) was 1 min;
In Example 10c, the duration of the soaking in step (3) was 60 min.

The shell of the silicon-carbon composite particles prepared in the preparation examples above comprises amorphous carbon.

Comparative preparation example 1

This comparative preparation example was performed with reference to Preparation example 1, except that the temperature and the flow rate and duration of silane gas introduction in step (2) were changed, specifically, before silane gas introduction, the temperature was adjusted to 450°C, and then silane gas was sequentially introduced at a flow rate of 25 sccm for 16 h and at a flow rate of 50 sccm for 4 h.

Comparative preparation example 2

This comparative preparation example was performed with reference to Preparation example 1, except that the temperature and the flow rate and duration of silane gas introduction in step (2) were changed, specifically, before silane gas introduction, the temperature was adjusted to 550°C, and then silane gas was sequentially introduced at a flow rate of 200 sccm for 1 h and at a flow rate of 400 sccm for 0.5 h.

Comparative preparation example 3

This comparative preparation example was performed with reference to Preparation example 1, except that in step (2), after the introduction of silane gas was stopped, acetylene gas was not introduced, and step (3) was directly performed.

Comparative preparation example 4

This comparative preparation example was performed with reference to Preparation example 1, except that the duration of acetylene gas introduction was changed, specifically, acetylene gas was introduced at a flow rate of 100 sccm for 300 min, where the thickness t of shell was 15 nm.

Comparative preparation example 5

This comparative preparation example was performed with reference to Preparation example 1, except that the duration of silane gas introduction was changed, specifically, silane gas was sequentially introduced at a flow rate of 100 sccm for 200 min and at a rate of 200 sccm for 80 min; Here, $c_1$ was 40%, $c_2$ was 60%, and $c_2/c_1$ was 1.5.

Comparative preparation example 6

This comparative preparation example was performed with reference to Preparation example 1, except that the duration of silane gas introduction was changed, specifically, silane gas was sequentially introduced at a flow rate of 100 sccm for 20 min and at a rate of 200 sccm for 80 min; Here, $c_1$ was 40%, $c_2$ was 5%, and $c_2/c_1$ was 0.125.

The following examples were used to describe the battery of the present disclosure.

Example 1

A battery was prepared according to the following method:

(1) Preparation of negative electrode plate
Artificial graphite, the silicon-carbon composite particles prepared in Preparation example 1, sodium carboxymethyl cellulose, styrene-butadiene rubber and SuperP were mixed in a mass ratio of 87.7 : 8.8 : 1.6 : 1.6 : 0.3, deionized water was added, and the mixture was subjected to the action of a vacuum mixer to obtain a negative electrode slurry; and the negative electrode slurry was uniformly coated onto the surfaces on both sides of a copper foil, dried in an oven at 80°C for 12 h, and then subjected to rolling and slitting to obtain a negative electrode plate.

(2) Preparation of positive electrode plate
Lithium cobalt oxide, polyvinylidene fluoride, acetylene black and carbon nanotubes were mixed in a mass ratio of 96 : 2 : 1.5 : 0.5, N-methylpyrrolidone was added, and the mixture was stirred under the action of a vacuum mixer until a uniform positive electrode slurry was formed; and the positive electrode slurry was uniformly coated onto the surfaces on both sides of an aluminum foil, baked in an oven, then transferred to an oven for drying at 120°C for 8 h, and then subjected to rolling and slitting to obtain a positive electrode plate.

(3) Preparation of lithium-ion battery

The negative electrode plate prepared in step (1), a separator (a polyethylene film with a thickness of 8 $\mu$m), and the positive electrode plate prepared in step (2) were sequentially stacked to ensure that the separator was between the positive electrode plate and the negative electrode plate and functioned for isolation, and then wound to obtain a bare cell; and the bare cell was placed in an aluminum plastic film casing, and an electrolyte (obtained by dissolving lithium hexafluorophosphate in a mixed solution comprising ethylene carbonate/dimethyl carbonate (1 : 1 by volume) and 5 vol.% fluoroethylene carbonate, with the concentration of lithium hexafluorophosphate being 1 mol/L) was injected into the dried bare cell, followed by procedures such as vacuum packaging, standing, formation, shaping, and sorting to obtain a lithium-ion battery.

(4) Preparation of button cell

The silicon-carbon composite particles prepared in Preparation example 1, SuperP, sodium carboxymethyl cellulose and styrene-butadiene rubber were mixed in a mass ratio of 96.5 : 1.6 : 1.6 : 0.3, deionized water was added, and the mixture was mixed until uniform under the action of a vacuum mixer to obtain a negative electrode slurry for a button cell; the negative electrode slurry for a button cell was coated onto a copper foil, dried in an oven at 80°C, and then transferred to a vacuum oven for drying at 100°C for 12 h to obtain a negative electrode plate with an areal density of about 3 mg/cm$^2$; in a dry environment, the negative electrode plate was punched into a negative electrode disc with a diameter of 12 mm using a punching machine; and in a glove box, the negative electrode disc as a working electrode, a metal lithium plate as a counter electrode, a 20 $\mu$m thick polyethylene separator as a separator, and an electrolyte (obtained by dissolving lithium hexafluorophosphate in a mixed solution comprising ethylene carbonate/dimethyl carbonate (1 : 1 by volume) and 5 vol.% fluoroethylene carbonate, with the concentration of lithium hexafluorophosphate being 1 mol/L) were assembled into a button half-cell.

A set of Examples 2-10 and Comparative examples 1-6 were performed with reference to Example 1, except that the silicon-carbon composite particles prepared in Preparation example 1 were replaced, and the details were shown in Table 4.

A set of Examples 11

This set of examples was used to verify the effect of the change in "the mass ratio of the silicon-carbon composite particles to the carbon-based material".

This set of examples was performed with reference to Example 1, except that the mass ratio of the silicon-carbon composite particles to artificial graphite was changed, and the details were as follows:

in Example 11a, artificial graphite, the silicon-carbon composite particles prepared in Preparation example 1, sodium carboxymethyl cellulose, styrene-butadiene rubber and SuperP were mixed in a mass ratio of 8.8 : 87.7 : 1.6 : 1.6 : 0.3; in Example 11b, artificial graphite, the silicon-carbon composite particles prepared in Preparation example 1, sodium carboxymethyl cellulose, styrene-butadiene rubber and SuperP were mixed in a mass ratio of 91.7 : 4.8 : 1.6 : 1.6 : 0.3; in Example 11c, artificial graphite, the silicon-carbon composite particles prepared in Preparation example 1, sodium carboxymethyl cellulose, styrene-butadiene rubber and SuperP were mixed in a mass ratio of 94.6 : 1.9 : 1.6 : 1.6 : 0.3; in Example 11d, the silicon-carbon composite particles prepared in Preparation example 1, sodium carboxymethyl cellulose, styrene-butadiene rubber and SuperP were mixed in a mass ratio of 96.5 : 1.6 : 1.6 : 0.3.

Test Example I

(1) Measurement of silicon element content

The silicon content of the silicon-carbon composite particles prepared in Preparation examples and Comparative preparation examples was measured. First, the silicon-carbon composite particles were mixed with a 6% polyacrylic acid solution in a mass ratio of 80: 10, and then applied onto the surface of a copper foil and dried, then treatment was performed using an argon-ion cutter, so as to obtain a cross-sectional sample of the silicon-carbon composite particles, and then the content c1 of silicon element in the first region and the content c2 of silicon element in the second region on cross section of the silicon-carbon composite particles were respectively measured using EDS, and the mass content of silicon element in the silicon-carbon composite particles was measured using a thermogravimetric analysis method, and the results were recorded in Table 1.

(2) Measurement of volume fraction of closed pores

The volume of the closed pores of the silicon-carbon composite particles prepared in Preparation examples and Comparative preparation examples was measured, and the true density of the silicon-carbon composite particles was obtained using gas volume displacement method, and then the volume of the closed pores was obtained by calculation, and the results were recorded in Table 1.

(3) Measurement of shell thickness

The thickness of the shell of the silicon-carbon composite particles prepared in Preparation example and Comparative preparation example was measured, and the results were recorded in Table 1.

(4) Measurement of element content

The element content of the silicon-carbon composite particles prepared in Preparation examples was measured, the contents of nitrogen element and sulfur element were measured using an element analyzer, the contents of phosphorus element and lithium element were measured using ICP-AES, and the results were recorded in Table 2.

(5) Measurement of particle size

The particle size of the silicon-carbon composite particles prepared in Preparation example was measured, and the results were rounded and recorded in Table 2.

(6) Measurement of oil absorption value

The oil absorption value of the silicon-carbon composite particles prepared in Preparation examples was measured, and the results were recorded in Table 3.

(7) Measurement of specific surface area

The specific surface area of the silicon-carbon composite particles prepared in Preparation examples was measured, and the results were recorded in Table 3.

(8) Thermogravimetric test

The silicon-carbon composite particles prepared in Preparation examples were subjected to thermogravimetric test, and the results were recorded in Table 3.

(9) Measurement of true density

The true density of the silicon-carbon composite particles prepared in Preparation examples was measured, and the results were as follows: All of the true densities of the silicon-carbon composite particles prepared in Preparation examples and Comparative preparation examples were 1.4 $g/cm^3$-2.2 $g/cm^3$.

Table 1

| | c1 (%) | c2 (%) | c2/c1 | Mass content of silicon element in silicon-carbon composite particles (%) | Volume of closed pores (%) | Thickness of shell (nm) |
|---|---|---|---|---|---|---|
| Preparation example 1 | 56 | 40 | 0.714 | 51 | 22 | 5 |
| Preparation example 2 | 38 | 9 | 0.237 | 25 | 35 | 1 |
| Preparation example 3 | 66 | 50 | 0.758 | 60 | 11 | 8 |
| Preparation example 4a | 71 | 55 | 0.775 | 64 | 5 | 5 |
| Preparation example 4b | 31 | 6 | 0.194 | 21 | 49 | 5 |
| Preparation example 5a | 55 | 39 | 0.709 | 50 | 20 | 0.2 |
| Preparation example 5b | 56 | 41 | 0.732 | 52 | 21 | 10 |

(continued)

| | c1 (%) | c2 (%) | c2/c1 | Mass content of silicon element in silicon-carbon composite particles (%) | Volume of closed pores (%) | Thickness of shell (nm) |
|---|---|---|---|---|---|---|
| Preparation example 6a | 41 | 51 | 1.244 | 47 | 25 | 5 |
| Preparation example 6b | 66 | 10 | 0.152 | 45 | 25 | 5 |
| Preparation example 7a | 55 | 40 | 0.727 | 50 | 21 | 5 |
| Preparation example 7b | 56 | 41 | 0.732 | 51 | 20 | 5 |
| Preparation example 8a | 55 | 40 | 0.727 | 50 | 21 | 5 |
| Preparation example 8b | 54 | 41 | 0.759 | 51 | 22 | 5 |
| Preparation example 9 | 54 | 40 | 0.741 | 51 | 20 | 5 |
| Preparation example 10a | 55 | 41 | 0.745 | 50 | 20 | 5 |
| Preparation example 10b | 55 | 40 | 0.727 | 51 | 21 | 5 |
| Preparation example 10c | 54 | 41 | 0.759 | 50 | 21 | 5 |
| Comparative preparation example 1 | 55 | 40 | 0.727 | 51 | 3 | 5 |
| Comparative preparation example 2 | 40 | 11 | 0.275 | 31 | 60 | 5 |
| Comparative preparation example 3 | 53 | 39 | 0.736 | 50 | 20 | 0 |
| Comparative preparation example 4 | 55 | 39 | 0.709 | 49 | 20 | 15 |
| Comparative preparation example 5 | 42 | 62 | 1.476 | 50 | 22 | 5 |
| Comparative preparation example 6 | 41 | 5 | 0.122 | 21 | 21 | 5 |

Table 2

| | Sum of contents of nitrogen element, phosphorus element and sulfur element (ppm) | Content of lithium element (%) | Dv10 (μm) | Dv50 (μm) | Dv90 (μm) | Dv90-Dv10 (μm) |
|---|---|---|---|---|---|---|
| Preparation example 1 | 311 | 3.1 | 4 | 9 | 15 | 11 |
| Preparation example 2 | 32 | 1.1 | 2 | 12 | 20 | 18 |
| Preparation example 3 | 495 | 4.9 | 5 | 7 | 12 | 7 |
| Preparation example 4a | 303 | 3 | 4 | 9 | 15 | 11 |
| Preparation example 4b | 317 | 3.2 | 4 | 9 | 15 | 11 |
| Preparation example 5a | 312 | 3.1 | 4 | 9 | 15 | 11 |
| Preparation example 5b | 323 | 3.1 | 4 | 9 | 15 | 11 |
| Preparation example 6a | 306 | 3.1 | 4 | 9 | 15 | 11 |
| Preparation example 6b | 320 | 3.2 | 4 | 9 | 15 | 11 |
| Preparation example 7a | 309 | 3 | 4 | 9 | 15 | 11 |
| Preparation example 7b | 0 | 2.8 | 4 | 9 | 15 | 11 |
| Preparation example 8a | 15 | 3.2 | 4 | 9 | 15 | 11 |
| Preparation example 8b | 996 | 3.1 | 4 | 9 | 15 | 11 |
| Preparation example 9 | 303 | 3 | 6 | 15 | 30 | 24 |
| Preparation example 10a | 313 | 0 | 4 | 9 | 15 | 11 |

(continued)

| | Sum of contents of nitrogen element, phosphorus element and sulfur element (ppm) | Content of lithium element (%) | Dv10 (μm) | Dv50 (μm) | Dv90 (μm) | Dv90-Dv10 (μm) |
|---|---|---|---|---|---|---|
| Preparation example 10b | 324 | 0.1 | 4 | 9 | 15 | 11 |
| Preparation example 10c | 307 | 19.5 | 4 | 9 | 15 | 11 |

Table 3

| | Oil absorption value (ml/100 g) | Specific surface area (m²/g) | Weight gain rate (%) at 600°C-800°C |
|---|---|---|---|
| Preparation example 1 | 31 | 1.7 | 6.3 |
| Preparation example 2 | 79 | 10.3 | 0.5 |
| Preparation example 3 | 53 | 0.5 | 24.8 |
| Preparation example 4a | 31 | 1.7 | 6.2 |
| Preparation example 4b | 31 | 1.7 | 6.5 |
| Preparation example 5a | 28 | 1.7 | 6 |
| Preparation example 5b | 31 | 1.7 | 6.2 |
| Preparation example 6a | 33 | 1.7 | 6.3 |
| Preparation example 6b | 32 | 1.7 | 6.1 |
| Preparation example 7a | 30 | 1.7 | 6 |
| Preparation example 7b | 32 | 1.7 | 6.2 |
| Preparation example 8a | 30 | 1.7 | 6.2 |
| Preparation example 8b | 33 | 1.7 | 6.2 |
| Preparation example 9 | 20 | 1.1 | 6 |
| Preparation example 10a | 31 | 1.7 | 6.2 |
| Preparation example 10b | 30 | 1.7 | 6 |
| Preparation example 10c | 32 | 1.7 | 6.3 |

Test Example II

(1) Cycling test

The lithium-ion batteries prepared in Examples and Comparative examples were subjected to a cycling test, and the specific test method was as follows:

a battery was charged at a constant current with a current density of 2C to 4.5 V, then charged at a constant voltage of 4.5 V to a cut-off current of 0.05C, and then left to stand for 10 min, and the thickness of the battery at this time was measured and recorded as an initial thickness; then, the battery was discharged to 3.0 V at a current density of 1.5C, and then left to stand for 10 min, and the discharge capacity of the battery at this time was recorded as an initial capacity; and the charge-discharge process described above was repeated until the constant-voltage charge process at the 500th cycle was completed, the battery was left to stand for 10 min, and then the thickness of the battery was measured and recorded as the thickness after cycling; and then the battery was discharged at a current density of 1.5C to 3.0 V and left to stand for 10 min, and the discharge capacity of the battery at this time was recorded as the capacity after cycling. The cycling capacity retention rate = the capacity after cycling × 100%/initial capacity, and the thickness expansion rate = (the thickness after cycling - initial thickness) × 100%/initial thickness. The cycling capacity retention rate and the thickness expansion rate were recorded in Table 4.

(2) Energy density test

The lithium-ion batteries prepared in Examples and Comparative examples were subjected to an energy density test, and the specific test method was as follows:

a battery was charged at a constant current with a current density of 0.2C to 4.5 V, then charged at a constant voltage of 4.5 V to a cut-off current of 0.02C, left to stand for 10 min, then discharged at a constant current with a current density of 0.2C to 3.0 V, and left to stand for 10 min, and the first-cycle discharge capacity and the first-cycle discharge energy of the battery were recorded; and the battery was then charged at a constant current with a current density of 0.2C until the cut-off condition that the charge capacity reached half of the initial discharge capacity was satisfied; and after the cut-off, the battery was removed to measure the thickness, length and width of the battery, and the energy density of the battery = first-cycle discharge energy/(length × width × thickness). The results were recorded in Table 4.

(3) Rapid discharge capability test

The lithium-ion batteries prepared in Examples and Comparative examples were subjected to a rapid discharge capability test, and the specific test method was as follows:

a battery was charged at a constant current with a current density of 0.2C to 4.5 V, then charged at a constant voltage of 4.5 V to a cut-off current of 0.02C, left to stand for 10 min, and then discharged at a current density of 0.2C and 1C respectively to 3.0 V, and the ratio of the capacity discharged at 1C to the capacity discharged at 0.2C is the rapid discharge capability of the battery. The results were recorded in Table 4.

(4) Initial Coulombic efficiency test

The button cells prepared in the set of Examples 1-10 and Comparative examples were subjected to an initial Coulombic efficiency test, and the specific test method was as follows:

after leaving to stand for 2 h, the battery was discharged at a constant current with a current density of 0.1C to 5 mV, left to stand for 10 min, then discharged at a current density of 0.01C to 5 mV, left to stand again for 10 min, and then charged at a constant current with a current density of 0.05C to 1.5 V. The initial Coulombic efficiency = charge capacity × 100%/discharge capacity. The results were recorded in Table 4.

(5) Ion diffusion coefficient test

After leaving to stand for 2 h, the battery was discharged at a constant current with a current density of 0.1C to 5 mV, left to stand for 10 min, then discharged at a current density of 0.01C to 5 mV, left to stand again for 10 min, and then charged at a constant current with a current density of 0.05C to 1.5 V and left to stand again for 10 min; the process of discharging the cell at a constant current with a current density of 0.1C for 30 min and leaving same to stand for 30 min was repeated until the voltage of the cell was less than 0.1 V, and the battery was left to stand again for 30 min, and the voltage E1 at this time was recorded; and then the cell was discharged at a constant current with a current density of 0.1C for 30 min, and the voltage E2 at the time when the discharge was performed for 10 s and the voltage E3 at the time of cut-off were recorded; and then the cell was left to stand for 60 min, and the voltage E4 after 60 min of standing was recorded. According to the equation:

$$ D = \frac{4}{\pi\tau} \left(\frac{nV}{S}\right)^2 \left(\frac{E1-E4}{E2-E3}\right)^2 $$

the lithium ion diffusion coefficient (in $cm^2/s$) of the silicon-carbon composite particles with a potential of 0.1 V (vs $Li^+/Li$) can be obtained, where $\tau$ is relaxation time, i.e., $\tau = 3,600$ s; n is the number of moles of the silicon-carbon composite particles, V is the molar volume of the silicon-carbon composite particles, and n × V is the volume of the silicon-carbon composite particles used for test, which can be calculated based on the mass w of the coating in the negative electrode plate of the button cell and the true density $\rho$ of the silicon-carbon composite particles, i.e., n × V = 0.965 × w/$\rho$; and S is the geometric area of the negative electrode plate of the button cell, i.e., S = 1.13 $cm^2$. The results are recorded in Table 4.

Table 4

| | Silicon-carbon composite particles | Cycling test | | Energy density (Wh/L) | Rapid discharge capability | Initial Coulombic efficiency | Lithium ion diffusion coefficient |
|---|---|---|---|---|---|---|---|
| | | Capacity retention rate | Thick ness expansion rate | | | | |
| Example 1 | Preparation example 1 | 92.8% | 7.5% | 855 | 95.2% | 91.70% | $9.5\times10^{-12}$ |
| Example 2 | Preparation example 2 | 93.1% | 7.1% | 851 | 95.1% | 92.10% | $8.7\times10^{-12}$ |
| Example 3 | Preparation example 3 | 92.6% | 7.3% | 860 | 95.2% | 91.90% | $8.9\times10^{-12}$ |
| Example 4a | Preparation example 4a | 90.0% | 9.3% | 850 | 95.0% | 91.50% | $7.9\times10^{-12}$ |
| Example 4b | Preparation example 4b | 92.7% | 7.7% | 821 | 94.90% | 91.30% | $7.7\times10^{-12}$ |
| Example 5a | Preparation example 5a | 92.70% | 7.60 % | 849 | 92.90% | 91.80% | $8.1\times10^{-12}$ |
| Example 5b | Preparation example 5b | 92.30% | 7.70 % | 827 | 94.80% | 91.20% | $7.8\times10^{-12}$ |
| Example 6a | Preparation example 6a | 89.20% | 9.10 % | 849 | 94.90% | 91.50% | $7.1\times10^{-12}$ |
| Example 6b | Preparation example 6b | 88.90% | 9.60 % | 848 | 94.70% | 91.30% | $8.2\times10^{-12}$ |
| Example 7a | Preparation example 7a | 91.80% | 7.70 % | 849 | 93.00% | 91.90% | $9.1\times10^{-13}$ |
| Example 7b | Preparation example 7b | 90.10% | 8.00 % | 845 | 92.10% | 92.10% | $1.5\times10^{-13}$ |
| Example 8a | Preparation example 8a | 91.90% | 8.10 % | 842 | 92.70% | 92.00% | $6.7\times10^{-13}$ |
| Example 8b | Preparation example 8b | 91.70% | 7.90 % | 826 | 95.00% | 89.70% | $9.6\times10^{-12}$ |
| Example 9 | Preparation example 9 | 91.90% | 7.80 % | 827 | 94.30% | 89.90% | $6.9\times10^{-12}$ |
| Example 10a | Preparation example 10a | 91.60% | 7.90 % | 819 | 94.70% | 88.60% | $6.8\times10^{-12}$ |
| Example 10b | Preparation example 10b | 91.70% | 7.90 % | 820 | 94.90% | 89.00% | $7.1\times10^{-12}$ |
| Example 10c | Preparation example 10c | 89.20% | 7.60 % | 828 | 95.10% | 99.70% | $8.5\times10^{-12}$ |
| Example 11a | Preparation example 1 | 92.00% | 7.90 % | 859 | 95.00% | / | / |
| Example 11b | Preparation example 1 | 93.10% | 7.00 % | 841 | 94.80% | / | / |
| Example 11c | Preparation example 1 | 93.10% | 7.20 % | 819 | 94.70% | / | / |
| Example 11d | Preparation example 1 | 89.70% | 9.90 % | 867 | 92.00% | / | / |

(continued)

| | Silicon-carbon composite particles | Cycling test | | Energy density (Wh/L) | Rapid discharge capability | Initial Coulombic efficiency | Lithium ion diffusion coefficient |
| | | Capacity retention rate | Thick ness expansion rate | | | | |
|---|---|---|---|---|---|---|---|
| Comparative example 1 | Comparative preparation example 1 | 82.10% | 14.70 % | 821 | 90.00% | 89.90% | $7.5 \times 10^{-14}$ |
| Comparative example 2 | Comparative preparation example 2 | 90.00% | 7.90 % | 773 | 90.60% | 88.70% | $3.2 \times 10^{-14}$ |
| Comparative example 3 | Comparative preparation example 3 | 89.90% | 9.10 % | 797 | 87.10% | 89.40% | $7.7 \times 10^{-13}$ |
| Comparative example 4 | Comparative preparation example 4 | 89.30% | 9.00 % | 783 | 90.20% | 88.80% | $5.9 \times 10^{-13}$ |
| Comparative example 5 | Comparative preparation example 5 | 77.50% | 12.80 % | 799 | 88.60% | 89.50% | $5.5 \times 10^{-13}$ |
| Comparative example 6 | Comparative preparation example 6 | 80.60% | 13.30 % | 788 | 89.50% | 87.60% | $6.7 \times 10^{-13}$ |

Notes: The initial Coulombic efficiency and lithium ion diffusion coefficient were measured through a button cell, and the button cell in the set of Examples 11 was the same as that in Example 1, so the set of Examples 11 was not subjected to the initial Coulombic efficiency and lithium ion diffusion coefficient tests, and "/" in Table 4 indicates "not tested".

As can be seen from Table 4, the battery prepared from the negative electrode active material of the present disclosure can have good energy density, initial Coulombic efficiency, rate performance and cycling stability at the same time compared to those in the Comparative examples.

The preferred embodiments of the present disclosure have been described in detail above; however, the present disclosure is not limited thereto. Within the technical concept of the present disclosure, various simple modifications can be made to the technical solution of the present disclosure, including the combination of various technical features in any other suitable way. These simple modifications and combinations should also be regarded as the content disclosed by the present disclosure and all fall within the scope of protection of the present disclosure.

## Claims

1.   A negative electrode active material, comprising silicon-carbon composite particles;

the silicon-carbon composite particles have closed pores, and the volume fraction of the closed pores is 4%-50%; the silicon-carbon composite particles have a core-shell structure, the shell of the core-shell structure comprises a carbon element and has a thickness of t, and $0 < t \leq 10$ nm; the silicon-carbon composite particles have a first region and a second region on cross section, the content of silicon element in the first region is c1, the content of silicon element in the second region is c2, and $0.15 \leq c2/c1 \leq 1.4$; where the dimension of the perpendicular line to the tangent line at any point on the edge (1) of the cross section is L on the cross section, and on the perpendicular line, a region 0.001L-0.1L away from the edge (1) of the cross section constitutes the first region (2), and a region 0.1L-0.5L away from the edge (1) of the cross section constitutes the second region (3).

2.   The negative electrode active material according to claim 1, wherein $0.15 < c2/c1 \leq 1.25$; preferably, $0.23 < c2/c1 \leq$

0.76;

and/or the volume fraction of the closed pores is 5%-49%; preferably 11%-35%;
and/or 0.2 nm $\leq$ t $\leq$ 10 nm; preferably, 1 nm $\leq$ t $\leq$ 8 nm.

3. The negative electrode active material according to claim 1 or 2, wherein the mass content of silicon element in the silicon-carbon composite particles is 20%-65%; preferably 21%-64%; more preferably 25%-60%;

and/or the content c1 of silicon element in the first region (2) is 30%-75%; preferably 31%-71%; more preferably 38%-66%;
and/or the content c2 of silicon element in the second region (3) is 5%-60%; preferably 6%-55%; more preferably 9%-50%.

4. The negative electrode active material according to claim 1 or 2, wherein the core of the core-shell structure comprises a carbon element and a silicon element;

preferably, the core comprises porous carbon and a silicon material located in the pores of the porous carbon;
preferably, the shell comprises amorphous carbon.

5. The negative electrode active material according to claim 1 or 2, wherein the silicon-carbon composite particles comprise at least one of a nitrogen element, a phosphorus element and a sulfur element;

preferably, the silicon-carbon composite particles comprise the nitrogen element, the phosphorus element and the sulfur element;
more preferably, the sum of the contents of the nitrogen element, the phosphorus element and the sulfur element in the silicon-carbon composite particles is 15 ppm-1000 ppm; preferably 30 ppm-500 ppm.

6. The negative electrode active material according to claim 1 or 2, wherein the particle sizes Dv90 and Dv10 of the silicon-carbon composite particles satisfy 5 $\mu$m $\leq$ Dv90-Dv10 $\leq$ 25 $\mu$m; preferably, 7 $\mu$m $\leq$ Dv90-Dv10 $\leq$ 24 $\mu$m; more preferably, 7 $\mu$m $\leq$ Dv90-Dv10 $\leq$ 18 $\mu$m;

and/or Dv10 is 1 $\mu$m-6 $\mu$m; preferably 2 $\mu$m-5 $\mu$m;
and/or Dv90 is 10 $\mu$m-30 $\mu$m; preferably 12 $\mu$m-20 $\mu$m.

7. The negative electrode active material according to claim 1 or 2, wherein the oil absorption value of the silicon-carbon composite particles is 10 ml/100 g-100 ml/100 g;
preferably, the oil absorption value of the silicon-carbon composite particles is 31 ml/100 g-79 ml/100 g.

8. The negative electrode active material according to claim 1 or 2, wherein the silicon-carbon composite particles comprise a lithium element;

preferably, the content of lithium element in the silicon-carbon composite particles is 0.1%-20%;
more preferably, the content of lithium element in the silicon-carbon composite particles is 1%-5%.

9. The negative electrode active material according to claim 1 or 2, wherein the silicon-carbon composite particles have a weight gain peak at 600°C-800°C in a thermogravimetric curve under an air atmosphere;

preferably, the silicon-carbon composite particles have a weight gain rate of 0.1%-40% at 600°C-800°C in a thermogravimetric curve under an air atmosphere;
more preferably, the silicon-carbon composite particles have a weight gain rate of 0.5%-24.8% at 600°C-800°C in a thermogravimetric curve under an air atmosphere.

10. The negative electrode active material according to claim 1 or 2, wherein the true density of the silicon-carbon composite particles is 1.4 g/cm$^3$-2.2 g/cm$^3$;

and/or the particle size Dv50 of the silicon-carbon composite particles is 6 $\mu$m-15 $\mu$m; preferably 7 $\mu$m-12 $\mu$m;
and/or the specific surface area of the silicon-carbon composite particles is 0.2 m$^2$/g-20 m$^2$/g; preferably 0.5 m$^2$/g-10.3 m$^2$/g.

11. A negative electrode plate, comprising the negative electrode active material according to any one of claims 1-10.

12. A battery, comprising the negative electrode active material according to any one of claims 1-10 and/or the negative electrode plate according to claim 11.

FIG. 1

FIG. 2

**European Patent Office**
Europäisches Patentamt
European Patent Office
Office européen des brevets

# EUROPEAN SEARCH REPORT

**Application Number**

EP 25 18 8497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 411 873 A1 (JIANGSU ZENERGY BATTERY TECH CO LTD [CN]) 7 August 2024 (2024-08-07) | 1-6,8-12 | INV. H01M4/133 H01M4/134 |
| Y | * paragraphs [0018], [0031], [0040] - [0041], [0079], [0089]; figure 1 * ----- | 7 | H01M4/36 H01M4/38 H01M4/587 |
| T | EP 4 632 840 A1 (LANXI ZHIDE ADVANCED MAT CO LTD [CN]) 15 October 2025 (2025-10-15) * paragraphs [0034], [0050] - [0051]; table 1 * | 1,5 | H01M10/0525 |
| Y | & WO 2024/120302 A1 (LANXI ZHIDE ADVANCED MAT CO LTD [CN]) 13 June 2024 (2024-06-13) ----- | 1,5 | |
| Y | CN 107 112 536 B (MITSUBISHI CHEM CORP) 16 November 2021 (2021-11-16) * paragraph [0343] - paragraph [0345] * ----- | 7 | |

**TECHNICAL FIELDS SEARCHED (IPC)**

H01M

The present search report has been drawn up for all claims

| Place of search | Date of completion of the search | Examiner |
|---|---|---|
| Munich | 15 December 2025 | Lavorenti, Marek |

EPO FORM 1503 03.82 (P04C01)

## ANNEX TO THE EUROPEAN SEARCH REPORT
## ON EUROPEAN PATENT APPLICATION NO.

EP 25 18 8497

15-12-2025

| Patent document cited in search report | | | Publication date | Patent family member(s) | | Publication date |
|---|---|---|---|---|---|---|
| EP 4411873 | A1 | | 07-08-2024 | CN | 115911341 A | 04-04-2023 |
| | | | | EP | 4411873 A1 | 07-08-2024 |
| | | | | US | 2024266495 A1 | 08-08-2024 |
| EP 4632840 | A1 | | 15-10-2025 | CN | 118173733 A | 11-06-2024 |
| | | | | EP | 4632840 A1 | 15-10-2025 |
| | | | | JP | 2025539903 A | 09-12-2025 |
| | | | | KR | 20250112285 A | 23-07-2025 |
| | | | | WO | 2024120302 A1 | 13-06-2024 |
| CN 107112536 | B | | 16-11-2021 | CN | 107112536 A | 29-08-2017 |
| | | | | EP | 3246974 A1 | 22-11-2017 |
| | | | | KR | 20170103003 A | 12-09-2017 |
| | | | | US | 2018013146 A1 | 11-01-2018 |
| | | | | US | 2020185721 A1 | 11-06-2020 |
| | | | | WO | 2016113952 A1 | 21-07-2016 |

For more details about this annex : see Official Journal of the European Patent Office, No. 12/82